## Europäisches Patentamt
## European Patent Office
## Office européen des brevets

(19)

(11) Publication number: **0 020 799**
**A1**

(12)

# EUROPEAN PATENT APPLICATION

(21) Application number: **79101957.3**

(22) Date of filing: **15.06.79**

(51) Int. Cl.³: **F 01 N 3/10, B 01 J 29/12, B 01 D 53/34**

(43) Date of publication of application: **07.01.81**
Bulletin 81/1

(84) Designated Contracting States: **AT BE CH DE FR GB IT LU NL SE**

(71) Applicant: **UNION CARBIDE CORPORATION, 270, Park Avenue, New York, N.Y. 10017 (US)**

(72) Inventor: **Rabo, Jule Anthony, 19 Windmill Road, Armonk, N.Y. (US)**
Inventor: **Bezman, Richard David, 383 S. Lexington Avenue, White Plains, N.Y. (US)**
Inventor: **Wolynic, Edward Thomas, 15 Herkimer, Road, Scarsdale New York 10583 (US)**

(74) Representative: **Eggert, Hans-Gunther, Dr., Raederscheidtstrasse 1, D-5000 Köln 41 (DE)**

(54) **Treatment of exhaust gas streams.**

(57) The treatment of gas streams such as exhaust gases from internal combustion engines to remove carbon monoxide and hydrocarbons by oxidative combustion and $NO_x$ constituents by reduction to nitrogen and water is accomplished by contacting the gas streams with a catalyst composition comprising a Group VIII metal supported on the surfaces of the pores of a hydrothermally stable hydrophobic form of zeolite Y.

ACTORUM AG

The present invention relates in general to the oxidative combustion of hydrocarbons and carbon monoxide and the conversion of nitrogen oxides, $NO_x$, to nitrogen. More particularly, it relates to the treatment of exhaust gases from internal combustion engines and the like to decrease atmospheric pollution by catalytically converting noxious components thereof to environmentally harmless substances, namely carbon dioxide, water vapor and nitrogen.

Few, if any, chemical processes place more demands on both the physical and chemical properties of a catalyst composition than does the treatment of exhaust gases from internal combustion engines to avoid atmospheric pollution. These exhaust gases contain not only carbon monoxide and organic constituents which require complete oxidative combustion, but also nitrogen oxides which require partial reduction to nitrogen to obtain an effluent complying with increasingly rigorous standards. Also, the exhaust gases contact the catalyst mass over an extreme range of temperature and space velocity conditions. During cold engine start-ups, the initial contact temperature can be as low as ambient, and over a period of one to two minutes increase to 400°C. or higher. When the engine is poorly tuned, the combustible content of such exhaust gases increases to several fold its normal concentration, giving rise to an increased demand on the catalyst and causing severe localized temperature increases in the catalyst bed due to the generated heat of combustion.

In view of these considerations, by far the most

-2-

effective catalysts presently in use in the automobile industry are Group VIII noble metals, particularly platinum and palladium, supported on inert refractory supports to catalyze the necessary oxidation reactions, and rhodium metal, similarly supported, to catalyze the conversion of $NO_x$ in the exhaust gas effluent to nitrogen. The most widely used refractory catalyst support material is gamma alumina, usually in the form of beads or as a coating on "honeycomb"-type monoliths. A standard catalyst currently in use in automobiles manufactured by one of the largest three United States producers consists of gamma alumina having impregnated thereon about 0.09 weight percent platinum and 0.04 weight percent palladium.

A principal disadvantage of alumina and other presently used refractory-based catalysts for auto emission control is the fact that they have essentially no oxidative activity below 250°C. Thus during the first two minutes or so after engine start-up, substantially all of the organic and CO pollutants in the exhaust stream pass unreacted through the catalytic converter and are vented into the atmosphere. These emissions constitute a large proportion of the total permitted under the present Federal standards (published in the "Federal Register," 36 (128) Part II (1971)) over the test period of 22.8 minutes. It is, therefore, necessary that the activity of the catalyst at operating temperatures, i.e. above 400°C., be maximized by the incorporation of relatively large quantities of noble metal. As emission standards become more stringent and the number of automobiles requiring such catalytic units increases, it is foreseeable that the demand for the noble metals involved will exceed the world's present mining capacity.

It has also been proposed to employ conventional zeolitic molecular sieves as supports for metal oxidation catalysts in auto emission control, particularly when the engine fuel contains tetraethyl lead. It is reported in U.S.P. 3,177,152 that molecular sieves retain a considerable amount of lead on their outer surfaces and thus serve as guards to protect the metal oxidation catalyst located within the zeolite cavities. Because of the strong affinity these zeolites have for water vapor, however, it is found that during the period when the automobile is not in use and during the first stages of cold engine start-up, the zeolite catalyst base becomes heavily loaded with adsorbed water and does not exhibit any appreciable catalytic activity until the water is desorbed. Moreover, since desorption is an endothermic process, the catalyst remains relatively cool for the period of desorption and exhibits an unacceptably low catalytic activity for a much longer initial period than the relatively non-adsorbing catalyst bases such as alumina. Even at high temperatures, water vapor is a catalyst "poison" in that it competes for interaction with the active sites of the zeolite. Accordingly, molecular sieve based combustion catalysts have not heretofore achieved commercial acceptance in the automobile industry.

We have now found that a particular modified form

-4-

of zeolite Y having one or more Group VIII metals deposited on the surfaces of its internal cavities overcomes the numerous problems encountered with other zeolite-based catalysts. The new catalyst also has a comparable life and a higher overall degree of activity than a presently used industrial standard alumina-based composition even with less than half of the noble metal content.

In general, the zeolite base of these catalyst compositions has a $SiO_2/Al_2O_3$ molar ratio of from about 4.5 to 35, preferably 4.5 to 9.0, the essential X-ray powder diffraction pattern of zeolite Y, an ion exchange capacity of not greater than 0.15, a unit cell dimension, $a_o$, of less than 24.45, preferably from 24.20 to 24.45 Angstroms, a surface area of at least 350 $m^2/g.$, a sorptive capacity for water vapor at 25°C. and a $p/p_o$ value of 0.19 of not greater than 12 weight percent and a Residual Butanol Test value of not more than 0.6 weight percent.

The preferred zeolite base of the present catalyst is described and methods for its manufacture set forth in detail in copending U. S. Application Serial No. entitled "Ultrahydrophobic Zeolite Y," filed contemporaneously with the present application and incorporated herein in its entirety by reference. The zeolite, hereinafter called UHP-Y is characterized as having a $SiO_2/Al_2O_3$ molar ratio of about 4.5 to 35, preferably 4.5 to 9.0, the essential X-ray powder diffraction pattern of zeolite Y, an ion-exchange capacity of not greater than 0.070, a unit cell dimension of less

-5-

than 24.45, a surface area of at least 350 $m^2/g.$, a sorptive capacity for water at 25°C. and a $p/p_0$ of 0.19 of not greater than 5.00 weight percent, and a Residual Butanol Test value of not more than 0.40 weight percent.

As used herein in this Specification and the appended claims, the following terms are intended to have the meanings set forth immediately below:

Hydrocarbons include, but are not limited, to the various molecular constituents of petroleum and the refined fractions thereof which are composed of hydrogen and carbon, and particularly those petroleum-derived molecular species commonly found in the exhaust streams from internal combustion engines. They include aliphatic alkanes (paraffins), alkenes (olefins) and alkynes and aromatic species having a benzene nucleus such as methane, ethane, propane, butane, ethylene, propylene, butylene, benzene, toluene.

$NO_x$ represents the general class of oxides of nitrogen, specifically $NO$, $NO_2$, $N_2O$, $N_2O_3$ and $N_2O_5$ or an individual species alone or in admixture with one or more other species thereof.

Surface area of all zeolitic compositions are determined by the well-known Brunauer-Emmett-Teller method (B-E-T) (S. Brunauer, P. Emmett and E. Teller, J. Am. Chem. Soc. **60** 309 (1938)) using nitrogen as the adsorbate.

The essential X-ray powder diffraction pattern of zeolite Y is set forth in U.S.P. 3,130,007, issued April 21, 1964 and is incorporated by reference herein in its entirety. It will be understood by those skilled in the art that the shrinkage of the unit cell resulting from the present stabilization process will cause some slight shift in the d-spacings. In all events, the X-ray diffraction pattern of the zeolitic compositions of this invention will exhibit at least the d-spacings corresponding to the Miller Indices of Table A below, and can contain all the other d-spacings permissible to the face-centered cubic system with a unit cell edge of 24.20 to 24.45 Angstrom units. The value of the d-spacings in Angstrom units can be readily calculated by substitution in the formula:

$$d_{hkl} = \frac{a_o}{\sqrt{h^2 + k^2 + 1^2}}$$

The X-ray pattern of the UHP-Y zeolites is obtained by standard X-ray powder techniques. The radiation source is a high intensity, copper target, X-ray tube operated at 50 Kv and 40 ma. The diffraction pattern from the copper K radiation and graphite monochromator is suitably recorded by an X-ray spectrometer scintillation counter, pulse height analyzer and strip chart recorder. Flat compressed powder samples are scanned at 1° per minute, using a 2 second time constant. Interplanar spacings (d) are obtained from Bragg Angle (2 theta) positions of peaks after subtracting background. The crystal symmetry is cubic.

TABLE A

| Miller Indices hkl | Intensity $I/I_0$ |
|---|---|
| 111 | very strong |
| 220 | medium |
| 311 | medium |
| 331 | strong |
| 333; 511 | medium |
| 440 | medium |
| 533 | strong |
| 642 | strong |
| 751; 555 | strong |

The anhydrous state of any zeolite composition for purposes of determining constituent proportions in terms of weight percent is the condition of the zeolite after being fired in air at 1000°C. for one hour.

The term ion exchange capacity or IEC is intended to denote the number of active cation sites in the zeolite which exhibit a strong affinity for water molecules and hence appreciably affect the overall capacity of the zeolite to adsorb water vapor. These include all sites which are either occupied by metal or non-metal cations, or which are not occupied by any cation, but in any event are capable of becoming associated with sodium cations when the zeolite is contacted at 25°C. three times for a period of one hour each with a fresh aqueous ion exchange solution containing as the

-8-

such that 100 ml. of solution is employed per 1 gram of zeolite with the ion-exchange solution. After this contact of
the zeolite with the ion-exchange solution, routine chemcial
gravimetric analysis is performed to determine the relative
molar proportions of $Al_2O_3$, $SiO_2$ and $Na_2O$. The data are then
substituted in the formula:

$$IEC = k[Na_2O/SiO_2]$$

wherein "k" is the $SiO_2/Al_2O_3$ molar ratio of the zeolite
immediately prior to contact with the NaCl ion-exchange
solution.

The Residual Butanol Test is a measure of the
adsorptive selectivity of zeolite adsorbents for relatively
non-polar organic molecules under conditions in which there
is active competition between water and less polar molecules
for adsorption on the zeolite. The test procedure consists
in activating the zeolite sample by heating in air at a
temperature of 300°C. for 16 hours. Thereafter, the
activated zeolite crystals are slurried with a solution of
1-butanol in water in proportions such that the slurry
consists of 1.0 part by weight 1-butanol, 100 parts by
weight water and 10 parts by weight of the as-activated
zeolite. The slurry is mildly agitated for 16 hours while
the temperature is maintained at 25°C. The supernatant
liquid is then analyzed for its residual 1-butanol content
in terms of weight percent.

For the determination of the sorptive capacity
of any zeolitic composition involved in this invention for
any particular adsorbate, the test zeolite sample is activated by preheating at a temperature between 350°C. and 425°C. for 16 hours at a pressure of 5 micrometers of mercury in a conventional McBain apparatus. Thereafter the temperature of the sample is adjusted to the desired value and contacted with the vapor of the test adsorbate at the desired pressure.

In the preparation of UHP-Y a number of different forms of zeolite Y can be used as starting materials. A particularly preferred starting composition is the low-sodium form of the steam stabilized zeolite Y described and claimed in the aforementioned copending U. S. Application Serial No. 846,312, filed October 28, 1977. That form of zeolite Y is prepared by the process which comprises providing an ion-exchanged zeolite Y having the following composition in terms of mole ratios of oxides:

$$0.75\text{-}0.9 \ (A)_2O : 0.1\text{-}0.25 \ Na_2O : Al_2O_3 : 4.6\text{-}5.4 \ SiO_2 : yH_2O$$

wherein "A" represents $H^+$ or $NH_4^+$ or a mixture thereof, and wherein "y" has a value of from 0-9, heating the zeolite at a temperature between 550°C. and 800°C. for a period of at least 0.25 hour in an inert atmosphere comprising sufficient steam, preferably an atmosphere of pure steam at greater than 10 psia, to prevent dehydroxylation of the zeolite, removing at least a major proportion of any ammonia generated by the heated zeolite from contact with the zeolite, and cooling the steamed zeolite to a temperature below 350°C. at a rate sufficiently rapid that the cooled zeolite exhibits an X-ray powder diffraction pattern having the d-spacings corresponding to the Miller Indices, hkl, of 331 at least as strong in intensity as that corresponding to the Miller Indices 533, prior to any post-steaming ion-exchange treatment. Thereafter, the sodium content of the zeolite is reduced to below 0.5 weight percent as $Na_2O$ on an anhydrous basis by conventional cation exchange with an ammonium salt such as ammonium chloride. The low-sodium product is then heated to a temperature of from $700^\circ C$ up to the crystalline destruction temperature, preferably between $750^\circ C$. and $870^\circ C$. in an atmosphere containing at least 0.2 atmospheres steam up to about 10 atmospheres, or even higher. Preferably, a pure steam environment of from 0.25 to 1.0 atmospheres is employed. The steam can be used in admixture with gases inert toward the zeolite such as air, nitrogen, helium, hydrogen and the like, particularly when the steam pressure is less than one atmosphere.

In general, the higher the steam temperature and pressure the shorter the time period required to transform the low-sodium starting materials to the ultrahydrophobic zeolite compositions of the present invention. Minimum steaming time is also dependent to some degree upon the particular starting zeolite employed and cannot, therefore, be set forth herein in terms of a mathematical relationship which is universally applicable. For example, using a steam pressure of about 1 atmosphere, it has been found that at $725^\circ C$. at least about 4 hours steaming time is required, but 16 hours is preferable. At $750^\circ C$. this minimum steaming time can be halved, and at 800°C. only about 0.5 hours is required. At 870°C. about 5 to 10 minutes steaming time can suffice, but these times are preferably longer by a factor of three or four to ensure optimum results. In any event, the efficacy of a given time, temperature, steam pressure and starting material can readily be validated by routine analysis of the product obtained to determine if the water adsorption capacity at 25°C. and 10 percent relative humidity is less than 5.00 weight percent and the Residual Butanol Test value is not greater than 0.40 weight percent. Unduly protracted steaming periods, i.e. greater than about 16 hours at 750°C. and 4 hours at 850°C., should be avoided since under the relatively rigorous steaming conditions imposed, the zeolite tends to lose structure and surface area due to hydrolytic side reactions.

Type-Y zeolite compositions suitable for use in the present invention other than the preferred UHP-Y subclass can be obtained by the same general procedure as used to obtain UHP-Y except that prior to the final steaming at 700°C to 870°C. it is necessary to reduce the sodium content of the precursor zeolite to below about 0.80 weight percent as $Na_2O$.

It is also feasible to obtain suitable catalyst bases for use in the present invention using only a single steam treatment or even no steam treatment at all. In the single steaming procedure an as-synthesized sodium zeolite Y having a $SiO_2/Al_2O_3$ molar ratio of at least 4.5 is subjected

-12-

to repeated ion-exchanges using fresh solutions of ammonium salts for each exchange so that the residual sodium cation content is lowered to below 0.8, preferably below 0.5, weight percent as $Na_2O$. The exchanged product is then steamed at above 750°C. as in the case of the UHP-Y.

In those cases where only dry calcination conditions are employed to obtain a zeolite Y composition sufficiently hydrophobic to be used as a catalyst base in this invention, the process disclosed by Maher and McDaniel in U.S.P. 3,293,192, U.S.P. 3,449,070 and "Molecular Sieves" p.186, Society of Chemical Industry, London, (1968) can be used. These disclosures are incorporated herein by reference. As reported therein, subjecting a zeolite Y to exchange with ammonium or hydrogen ions under conditions sufficiently rigorous to reduce the original sodium cation content to less than 1.0 weight percent, coupled with calcination at temperatures in the range of 1000°F. to 1500°F. results in a hydrothermally stable product which has an adsorption capacity for water vapor at 25°C. and 10 percent relative humidity of not greater than 12 weight percent. In products prepared in this manner, it is essential that the $Na_2O$ content of the final composition not exceed 1.0 weight percent. At higher sodium levels, the zeolite loses its stability.

For oxidative combustion of carbon monoxide, hydrocarbons and organic molecules in general, the Group VIII metals dispersed within the pores of the zeolite base can be any one or a mixture of two or more of those metals of the

-13-

group having an atomic number of greater than 26. For the conversion of $NO_x$ to nitrogen, the Group VIII metal should be one or a mixture of two or more of rhodium, ruthenium, nickel and cobalt. For both types of reactions the suitable noble metals are greatly preferred over the non-noble species, particularly those such as platinum, palladium and rhodium which do not form volatile oxides. Even though ruthenium is known to form an oxide, $RuO_4$, which is more volatile than desirable when merely impregnated on support materials such as alumina, it is found that the zeolite pore system of the present catalysts tends to curtail the loss of $RuO_4$ through volatilization.

Group VIII metal in the amount of at least 0.001 weight percent based on the anhydrous weight of the zeolite base is desirable for service in auto emission control, but the precise minimum is not critical and will depend in large measure upon the carbon monoxide and/or organic content of the gas stream being treated, the process conditions such as temperature and space velocity, and the degree of conversion desired. Amounts of Group VIII metals as high as 3.0 weight percent can be used but in general, more than 2.0 weight percent does not add appreciably to the effectiveness of the catalyst. Preferably, noble metal loadings of from 0.1 to 1.6 weight percent are employed.

It is a critical feature of the present catalyst compositions that at least a portion, preferably the major proportion of the noble metal or other Group VIII metal be deposited in the pores of the zeolite rather than on the exterior surface of the zeolite crystals or on the binder or diluent material if such is present. Above loadings of 0.05 weight percent on typical prior-known non-zeolite monolith catalysts, the dispersed noble metal phase appears as small crystallites which have properties similar to those of the bulk metal. These crystallites sinter severely at temperatures of about 1600°F. with the consequent loss of activity. Such sintering is retarded in the zeolite catalysts of this invention with respect to the noble metal deposited in the pores. To accomplish this type of metal loading, at least two different procedures are known in the art, namely (1) cation exchange using an aqueous solution of a suitable Group VIII metal compound in which the metal is in the cationic state with coordination complexing agents followed by thermal or chemical decomposition of the cationic complex and (2) adsorption of a fluid decomposable compound of the desired Group VIII metal by the zeolite followed by thermal or chemical decomposition of the metal compound. In method (2), the zeolite is contacted with a fluid decomposable compound of the metal thereby adsorbing the compound into the sieve. Typical of such compounds are the metal carbonyls, metal alkyls, volatile metal halides and the like. The internally adsorbed compound is then reduced thermally or chemically thus leaving an active metal uniformly dispersed throughout the internal adsorption region of the molecular sieve. The ion exchange procedure of method (1) is readily accomplished in the well-known manner. Specific procedures are set forth in detail in U.S.P. 3,236,903, issued February 22, 1966.

In carrying out the oxidative combustion process the temperature at which the carbon-containing substrate and oxygen contact the catalyst mass will vary somewhat depending upon the particular substrate involved. In general, however, the ignition temperature will be in the range of about 250 to about 400°C. but minimum temperatures of at least 400°C. are commonly required in treating exhaust gases from internal combustion engines. Temperatures as high as the crystal destruction temperature of the zeolite can be employed. The concentration of oxygen in the gas stream being treated is not a narrowly critical factor, but as a practical matter ought to be at least sufficient to provide for the stoichiometric requirements of the oxidation reactions involved.

In the conversion of $NO_x$ constituents of exhaust gas streams to nitrogen, it is found that the catalytically active metals, namely ruthenium, rhodium, nickel and cobalt are enhanced in their activity by virtue of the present zeolitic support compositions. As in the case of oxidation catalysis, a much lower concentration of these metals in the compositions of this invention results in a degree of conversion attained only by using approximately twice as much metal in non-zeolitic carriers such as alumina. The amount of rhodium or ruthenium loaded on the zeolite is dependent

-16-

upon the $NO_x$ conversion process involved, but in auto emission control for conventional passenger automobiles, loadings of from about 0.001 to 2.0 weight percent based on the anhydrous weight of the zeolite base are suitably employed. The same loadings are applicable for nickel and cobalt, but since cost considerations are not a dominant factor, much larger amounts of these less expensive metals are feasible.

As is well known in the art, the $NO_x$ conversion requires an essentially neutral atmosphere whereas the CO and hydrocarbon oxidation reactions require an oxidizing environment. Both types of conversion reactions are readily applied to a single exhaust gas stream, however, by limiting to a practical degree the oxygen content of the engine exhaust gases as they enter the conversion system, contacting the rhodium, nickel, cobalt or ruthenium-loaded zeolite composition first to convert the $NO_x$ constituents and thereafter passing the effluent from this first bed or bed section with extraneous oxygen, ordinarily in the form of air, into the oxidation catalyst mass. In practice under normal conditions in an actual automobile a substantial cooling of exhaust gases with increased passage through the exhaust system to the converter system is encountered. In such cases the high activity of the oxidation catalysts of this invention assumes added significance. Operating temperatures of the catalyzed $NO_x$ conversion reaction are from about 250°C. to 800°C. with temperatures of from about 450°C. to about 600°C. being preferred.

Although in this Specification and in the appended

-17-

claims the principal catalytic agent is referred to as a Group VIII metal or a noble metal, it will be understood that the term "metal" is used in its conventional sense in the art to include not only the elemental metal per se, but also the active compounds of the Group VIII metals such as oxides, chlorides, sulfides, amines and the like which exhibit the same type of catalytic activity as the elemental metal even though the degree of activity may not be the same. It has been found that the zeolite-based catalysts of this invention exhibit their highest level of activity if they have been subjected to a reducing atmosphere at elevated temperatures. For this purpose, hydrogen, or advantageously a mixture of nitrogen and hydrogen in which the latter is in sufficiently low concentration to be non-explosive is used to contact the metal-loaded catalyst, preferably at a temperature of from about 300°C. to 500°C. for a period of from 1 to 3 hours. Any conventional reduction technique can be employed, however.

The present catalyst compositions were evaluated both in the laboratory, in which gas streams containing carbon monoxide, propylene and propane as model constituents were employed, and in place as a conversion system connected to a standard automobile engine exhaust system. Both freshly prepared catalyst compositions and catalysts aged to the equivalent of use in service for 33,000 and 50,000 road miles, respectively, were tested. Hereinafter reference to aged samples is intended to denote catalyst samples subjected

-18-

to the following procedure or one not materially different therefrom.

The aging system consisted of a V-8, 302 C.I.D. engine dynamometer having a cylindrical canister 9-3/4" in diameter and 12" in length positioned in the exhaust line downstream of a monitored and preheated air injection to provide an environment containing excess oxygen. The catalyst samples were packed into this canister in a manner to limit sample vibration and to avoid channeling or bypassing of the exhaust gases conducted therethrough. The temperature of the engine exhaust gases at the ingress end of the sample canister as well as the samples per se were monitored with thermocouples connected to a multi-point recorder. The inlet exhaust gas CO and hydrocarbon concentrations were also monitored with on-line analyzers. A four hour aging cycle was employed consisting of a 220 minute lead deposition mode and a 20 minute thermal deterioration mode using as engine fuel an unleaded gasoline (0.02 g. Pb/gal.). In the former mode, test conditions were: 2300 engine rpm, 35 lb. engine load, 4.5 ft.$^3$/min. air injection, 0.5% inlet CO, 150 ppm. inlet hydrocarbon, 850°F. inlet exhaust temperature and 1000°F. maximum catalyst bed temperature. In the latter mode, test conditions were: 2800 engine rpm, 35 lb. engine load, 9.0 ft.$^3$/min. air injection, 3.0% inlet CO, 200 ppm. inlet hydrocarbon, 900°F. inlet exhaust temperature and 1400°F. maximum catalyst bed temperature. A period of 200 hours of the above-accelerated aging cycle was equivalent to 33,000 road miles, and 300 hours was equivalent to 50,000 road miles.

The preparation of the catalyst compositions of this invention and data demonstrating their effectiveness as oxidation and $NO_x$ conversion catalysts are illustrated and set forth in the following examples:

## EXAMPLE 1

### (a) Preparation of Intermediate In The Synthesis of UHP-Y Zeolite

A sample of air-dried ammonium exchanged type Y zeolite having a composition exclusive of water of hydration:

$$0.156 \ Na_2O : 0.849 \ (NH_4)_2O : Al_2O_3 : 5.13 \ SiO_2$$

was tableted into 1/2 inch diameter slugs and charged to a Vycor tube 24 inches in length and 2.5 inches in diameter and provided with an external heating means. Over a period of 0.25 hours, the temperature of the charge was raised to 600°C. and thereafter maintained at this temperature for one hour. During this 1.25 hour period, a pure steam atmosphere at 14.7 psia generated from demineralized water was passed upward through the charge in the tube at a rate of 0.1 to 0.5 pounds per hour. Ammonia gas generated during the heating by deamination of the zeolite was passed from the system continually. At the termination of the heating period the steam flow through the tube was stopped and the temperature of the charge in the tube was lowered to ambient room temperature over a period of 5 minutes. Analysis of this composition indicated the characteristic X-ray powder

-20-

diffraction pattern of zeolite Y, a surface of 760 $m^2/g$. and an $a_o$ value of 24.52 Angstroms. Thereafter the sodium cation content of the first steamed material was reduced to 2.0 equivalent percent (0.27 weight percent as $Na_2O$) by ion exchange using an aqueous solution of $NH_4Cl$ (30 wt.-%) at reflux. The Residual Butanol Test value for this composition was 0.91 weight percent.

(b) Preparation of UHP-Y.

The low-sodium starting material prepared in part (a) supra was converted to the UHP-Y composition of the present invention using the same apparatus and conditions as in part (a) except that the pure steam calcination environment was passed over the sample in the reactor at 14.7 psia at a temperature of 800°C. for 4 hours. The product was cooled to ambient room temperature in a desiccator and portions thereof analyzed for ion-exchange capacity, B-E-T nitrogen surface area, adsorption capacity for water, nitrogen and n-hexane and Residual Butanol test value. The data from the analyses are set forth below:

| Adsorbate | Pressure, mm. Hg | Temp., °C. | Loading, wt.-% |
|-----------|------------------|------------|----------------|
| Nitrogen  | 35   | -196 | 15.8 |
| "         | 66   | "    | 16.5 |
| "         | 137  | "    | 17.3 |
| "         | 528  | "    | 19.2 |
| Water     | 2.0  | 25   | 3.1  |
| "         | 4.6  | "    | 4.6  |
| "         | 20.0 | "    | 15.0 |
| n-Hexane  | 5.0  | 25   | 10.8 |
| "         | 20.0 | "    | 14.2 |
| "         | 50.0 | "    | 16.0 |
| "         | 75.0 | "    | 19.8 |

Ion-Exchange Capacity:   =   0.04

Surface Area:   =   570 m$^2$/g.

Residual Butanol Value:   =   0.23 weight percent

## EXAMPLE 2

Three samples of the UHP-Y zeolite base composition as prepared in parb (b) of Example 1 were loaded with platinum, palladium and rhodium and the resulting products coated on the surface of monolith structures by the following general procedure: Fifty grams of each sample of zeolite base were separately dispersed in 250 ml. distilled water to form a slurry. To the slurry was added dropwise 50 ml. of an aqueous solution containing the requisite amount of the noble metal complexes Pt(NH$_3$)$_4^{+2}$, Pd(NH$_3$)$_4^{+2}$, and Rh(NH$_3$)$_5$Cl$^{+2}$. The resultant system were maintained at ambient room temperature and stirred for about 16 hours and then the zeolite solids isolated by filtration, washed and dried in air.

The rigid monolith structures involved were of

0020799

a general "honeycomb" configuration and were constructed of a refractory ceramic composition. In coating these monoliths with a mixture of 80 weight percent noble metal-loaded zeolite and 20 weight percent acid-peptized boehmite binder the following procedure was used: The coating mixture was prepared by dispersing 16.0 grams zeolite (dry basis) and 3.5 grams boehmite (dry basis) in 80 ml. water and then adding 20 ml. of a 20 wt.-% $Al(NO_3)_3 \cdot 9\ H_2O$ solution. After several minutes of additional stirring, a smooth jelly-like mass resulted which, when diluted with an additional 10-15 ml. water, was sufficiently fluid to easily flow into the channels of the monolith structure. The coating procedure consisted of dipping weighed monoliths into the desired slurry to fill the channel system completely, draining out the excess slurry and then drying at 110°C. Approximately 5 weight percent of the coating mixture was deposited in this manner, with heavier coats being obtained by repeating the procedure. In practice, two coats of the mixture produced a useful overall loading of the catalyst. Following the final coating and drying, the monoliths were fired at 300°C. to activate the catalyst components and to convert the boehmite to gamma alumina. The monoliths were cooled in a desiccator and reweighed to compute the catalyst loading. The noble metal content of the three prepared samples (monoliths) was as follows:

Sample 2a: Monolith containing 0.093 weight percent platinum and 0.009 weight percent rhodium.

Sample 2b:    Monolith containing 0.079 weight percent platinum and 0.021 weight percent palladium.

Sample 2c:    Monolith containing 0.092 weight percent platinum.

All of these samples were compared for oxidation activity with a standard commercial auto emission catalyst taken from a currently retailed replacement catalytic converter for 1977 model year Ford automobiles. This standard catalyst consisted of gamma alumina having impregnated thereon 0.091 weight percent platinum and 0.041 weight percent palladium. The test apparatus consisted of a stainless steel fixed-bed reactor forty-eight inches long and having an inside diameter of one inch, and mounted in a three-zone furnace having independent zone temperature control. Imbedded thermocouples monitored the bed temperatures. The CO and hydrocarbon feed stock which simulated the essential composition of automobile exhaust gas streams was flow-monitored from either of two custom-blended cylinders. One contained a feedstock consisting of 0.054 percent propylene, 1.42 percent CO, 2.60 percent oxygen and 95.93 percent nitrogen on a volume basis. The other contained a feedstock consisting of 0.054 percent propane, 1.39 percent CO, 2.60 percent oxygen and 95.96 percent nitrogen. The contained oxygen represented a 172.8 percent and 169.4 percent, respectively, theoretical excess in the olefin and paraffin feeds. Pump means were provided to blend 10 moles water/90 moles dry gas into the feed gas upstream of the reactor. The reactor was loaded with 165 cc. of 6 x 10 mesh fused quartz chips, which served as a catalyst support, and sufficient catalyst sample in particulate form to provide 3.43 mg. of noble metal was next inserted into the reactor, and finally the reactor was loaded with 340 cc. 6 x 10 mesh fused quartz chips which served as a feed preheat section. After loading, the reactor was purged with approximately 5 SCF/hr. of nitrogen for 15 minutes to remove any oxygen present. The noble metal oxide on the zeolite at this stage was reduced using 5 SCF/hr. hydrogen flow while the catalyst bed was heated to 900°F. and maintained there for about 16 hours. Thereafter the reactor and contents were cooled to the starting temperature and the selected feedstock was caused to flow through the reactor at an equivalent gas feed rate per unit weight of noble metal. In those cases where the starting temperature was below the catalyst "ignition point," the bed temperature was raised in small increments until the ignition point was reached as evidenced by an increase of temperature along the length of the catalyst section of the reactor due to the exothermic nature of the combustion reaction. Catalyst performance was measured in terms of the effluent temperature necessary to achieve a 50 percent conversion of carbon monoxide, $T_{1/2}(CO)$, and hydrocarbon, $T_{1/2}(C_3H_6)$ and $T_{1/2}(C_3H_8)$.

The test procedure was repeated using, except for the rhodium-containing sample, the same samples after being aged by the accelerated method described hereinbefore to the equivalent of 33,000 road miles. A comparison of the

-25-

effectiveness of the various zeolite-based catalyst compositions is shown in Table I below in terms of the number of degree Fahrenheit each required to accomplish a 50 percent conversion of the test substrates.

Table I

| Catalyst | | $T_{1/2}$, $^{\circ}F.$ | | |
|---|---|---|---|---|
| | | CO | $C_3H_6$ | $C_3H_8$ |
| Fresh | Commercial Standard ....Pt+Pd/$\gamma$-Al$_2$O$_3$ | 513 | 550 | 978 |
| | Sample 2a ...Pt+Rh/zeolite | 545 | 570 | 758 |
| | Sample 2b ...Pt+Pd/zeolite | 548 | 578 | 745 |
| | Sample 2c .... Pt/zeolite | 584 | 610 | 648 |
| Aged | Commercial Standard .. Pt+Pd/$\gamma$-Al$_2$O$_3$ | 627 | 660 | 1152 |
| | Sample 2b .. Pt+Pd/zeolite | 615 | 667 | 980 |
| | Sample 2c .... Pt/zeolite | 626 | 676 | 983 |

It is apparent from the data of Table I that when fresh, the catalysts of the present invention are comparable to the best prior-known catalyst for carbon monoxide and olefin oxidation, and vastly superior in paraffin oxidation. When aged, the present catalysts are equal to or superior to the similarly aged prior art catalysts in carbon monoxide combustion, essentially equal in olefin oxidation, and still vastly superior in paraffin oxidation. Paraffin oxidation is of critical importance since the treatment of exhaust gas streams to reduce $NO_x$ constituents to nitrogen results in a greatly increased paraffin fraction in the residual gas stream to be oxidatively combusted. The consequent decrease in the olefin fraction renders the ignition of the exhaust stream more difficult to ignite. Also paraffins are the predominant hydrocarbons of diesel exhausts, and accordingly such exhausts are intrinsically more difficult to ignite in a catalytic combustion system.

### EXAMPLE 3

In a comparison of the combustion efficiency of catalysts of the present invention, one of the best available commercial alumina-based catalysts, and a catalyst composition having a hydrophilic zeolite base, three catalyst monoliths of the following composition were prepared:

Catalyst (3a-fresh): Monolith coated with platinum loaded UHP-Y zeolite containing 18.5 grams of platinum metal per cubic foot of monolith.

Catalyst (3a-aged): Monolith identical with (3a-fresh) except that it had been aged the equivalent of 4,000 road miles.

Catalyst (3b-fresh): Monolith coated with a platinum loaded zeolite composition as prepared in Example 1(a) containing 18.9 grams of platinum per cubic feet of monolith. The comparison sample was a monolith of the same commercial standard alumina-based catalyst of Example 2, aged the equivalent of 4,000 road miles (hereinafter called Catalyst 3C-aged.

The test conditions were those prescribed by the standard CVS-HC test specified in Federal Register, 36 (128) Part II (1971). The test vehicle was a 2.3 liter

-27-

Ford Pinto equipped with automatic transmission. The inertia weight of the vehicle was 2750 pounds and the actual horsepower of the engine was 10.9. The combustion efficiency of each catalyst composition as determined by analysis of the exhaust stream are set forth in Table II below:

TABLE II

| Catalyst | Hydrocarbon Combustion, % Efficiency | CO combustion, % Efficiency |
|----------|--------------------------------------|------------------------------|
| 3a-fresh | 86.3 | 89.9 |
| 3a-aged | 85.1 | 93.9 |
| 3b-fresh | 81.7 | 80.8 |
| 3c-aged | 81.5 | 89.4 |

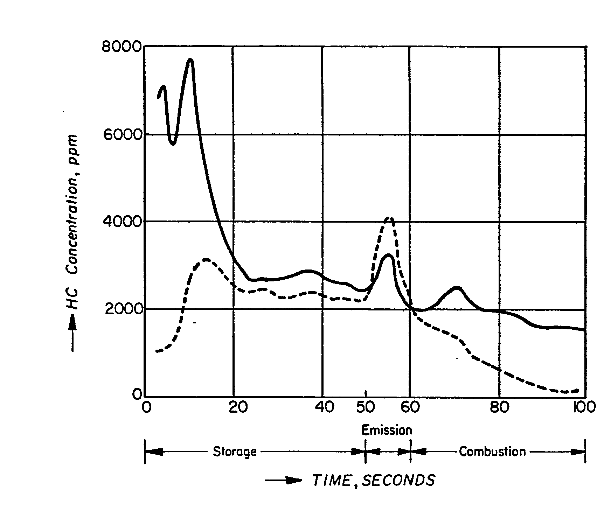

As a part of this test procedure using sample 3a, i.e. the catalyst of the present invention, the total hydrocarbon emission from the engine upstream of the catalytic converter and the total hydrocarbon emission leaving the catalytic converter were both measured over the period of the first 100 seconds after cold start-up of the engine. The results are shown in graphic form in the figure of the drawings. In the figure, the solid line represents the concentration of hydrocarbon entering the catalyst bed, i.e. the converter. The broken line represents the concentration of hydrocarbon in the effluent from the catalytic converter. During the first 50 seconds the catalyst is too cold to initiate combustion of the hydrocarbon and, accordingly, the difference between the concentration of the influent and the effluent is due to adsorptive storage of the hydrocarbon on the zeolite.

-28-

At 50 seconds elapsed time the temperature of the catalyst has risen to a degree sufficient to cause some desorption of the hydrocarbon from the zeolite but not enough to cause ignition. Therefore, over the period of 50 seconds to 60 seconds of lapsed time a small volume of hydrocarbon is emitted. Beyond 60 seconds, the catalyst temperature is high enough to induce combustion and oxidation of the hydrocarbon begins.

## EXAMPLE 4

The storage capacity of the zeolite-based catalysts of the present invention during the first 67 seconds after cold engine start-up can be compared with that of a conventional alumina-based catalyst using the following data. In this comparison the activity of the catalysts is not involved and hence the only significant factor is that the catalyst masses were essentially the same at 1250 grams. In the test procedure the total weight in grams of hydrocarbon constituents in the exhaust gas stream from an automobile engine was determined before entering the catalytic converter and after emerging from the catalytic converter over various periods of not more than 24 seconds. The amount of hydrocarbon adsorbed or retained by the catalyst at the end of the measurement interval is indicated by a positive (+) value. Where more hydrocarbon was emitted than entered the converter, the Δ value is negative (-). The Δ values are the net hydrocarbon retention in grams on a cumulative basis. In the reported data set forth in Table III the term "In" denotes the number of grams of hydrocarbon in the influent to the converter and "Out" denotes the values for the effluent from the converter.

TABLE III

| Time,sec. | | Zeolite Catalyst | | | | Alumina Catalyst | | | |
|---|---|---|---|---|---|---|---|---|---|
| $\Delta$ | $\Sigma$ | In | Out | $\Delta$ | $\Sigma$ | In | Out | $\Delta$ | $\Sigma$ |
| 24 | 24 | .68* | .28* | +.40 | .40 | 1.35 | 1.01 | +.34 | .34 |
| 12 | 36 | .32 | .30 | +.02 | .42 | .59 | .74 | -.15 | .19 |
| 08 | 44 | .19 | .23 | -.04 | .38 | .18 | .20 | -.02 | .17 |
| 08 | 52 | .13 | .14 | -.01 | .37 | .28 | .32 | -.04 | .13 |
| 07 | 59 | .18 | .18 | | .37 | .19 | .21 | -.02 | .11 |
| 08 | 67 | .14 | .14 | | .37 | .25 | .27 | -.02 | .09 |

* For 21 seconds only.

It is readily apparent from the data of Table III that the net retention of hydrocarbons on the zeolite catalyst at the time combustion begins after cold start-up is about four times as great as on the present commercial standard catalyst, and that the retained hydrocarbons are combusted on the catalyst bed.

EXAMPLE 5

A comparison of the effectiveness of the present zeolite-based catalysts and alumina-based catalysts in the conversion of $NO_x$ to nitrogen and water was made using noble metal-loaded monoliths of each type. The alumina-based monolith contained 40 grams per cubic foot of a mixture of platinum and rhodium in a weight ratio of 11:1. The zeolite-based monolith was prepared in essentially the same manner as set forth in Example 2 supra, and contained 16 grams per cubic foot of a mixture of platinum and rhodium in a weight ratio of 10:1. Both monoliths were pre-aged the equivalent of 50,000 road miles. At a stoichiometric air/fuel ratio of about 1.0 the commercial alumina catalyst had a conversion efficiency for $NO_x$ of about 43 percent. Under the same conditions the zeolite-based catalyst had a conversion efficiency of 33 percent even though it contained only about 1/3 of the noble metal loading.

The precise manner for using the catalysts of this invention will depend on the particular gas stream being treated and the degree of conversion desired. The catalyst system can comprise a separate bed, or bed section, for $NO_x$ conversion in which the metal loading on the zeolite is selected and optimized for that reaction, with the catalyst of the combustion section similarly optimized for the oxidation reaction. In some instances it may be advantageous to prepare only one catalyst composition which can function either as a reduction or as an oxidation promoter depending upon the composition of the gas stream.

It should also be understood that the manner of loading Group VIII metals on the monoliths or other support means is not limited to the procedure set forth herein for purposes of illustration. For example, the metal loading can be done during the course of coating the monolith with the zeolite base or even after the zeolite base has been coated on the support means,

- 31 -

particularly where maximum efficient use of the metal is not of paramount importance as in the case of nickel and cobalt.

The present zeolite catalyst bases without being loaded with catalytically active metals can be used in conjunction with the present catalyst compositions to increase the adsorptive storage capacity of the conversion system, for example during cold start-up of internal combustion engines. In utilizing such zeolite adsorbents, care should be taken that the desorption of the temporarily retained molecules therefrom which occurs as a result of increasing temperatures during engine warm-up is such that they contact catalyst constituents at catalytic conversion conditions. Care should also be taken that desorbate slugs of high hydrocarbon content do not contact the active catalyst mass in a manner which causes undue overheating of the catalyst system due to the heat of combustion evolved.

In the simplest embodiment, the non-catalytic adsorbent constituents are dispersed more-or-less uniformly with the active catalyst constituents on the refractory support. A more efficient, and complex, design comprises coating the merely-adsorbent constituent with the catalytically active constituents so that all of the zeolite particles are involved in the adsorption-storage aspect at low temperatures, but when the temperature has been increased sufficiently to initiate catalytic conversion, the retained molecules upon desorption must necessarily pass over and contact the active catalyst constituent.

For use in the aforesaid adsorption-storage aspect of this invention, any of the many organophilic zeolites known in the art will suffice. Zeolitic molecular sieves which have $SiO_2/Al_2O_3$ molar ratios of about 20 or greater are well suited for this purpose. These so-called large pore zeolites include the synthetic or acid-washed natural mordenite zeolite capable of adsorbing benzene such as described in U.S.P. 3,436,174, issued April 1, 1969; Type-L zeolites as disclosed in U.S.P. 3,216,789 issued November 9, 1965; Type-Y zeolites as disclosed in U.S.P. 3,310,007, issued April 24, 1964; Type Omega zeolites as disclosed in British Patent 1,178,186, published January 21, 1970; and the various members of the ZSM-5 family of zeolites disclosed variously in U.S.P. 3,702,886, U.S.P. 3,709,979, and collectively in U.S.P. 3,756,942. In general, the ZSM-5 type zeolites can be directly synthesized to have framework $SiO_2/Al_2O_3$ molar ratios of greater than 25 and even greater than 40. The other large pore zeolites which cannot be synthesized in a sufficiently highly siliceous form can be modified by the removal of framework aluminum to appropriate degrees by well-known procedures such as steaming, acid extraction and chelation with EDTA or acetylacetone. Steam calcination at elevated temperature above about 700°C. is recommended following any chemical removal of framework alumina.

WHAT IS CLAIMED IS:

1. Oxidation process which comprises contacting at an elevated temperature a mixture of oxygen and at least one carbon-containing compound selected from the group consisting of carbon monoxide and hydrocarbons with a catalyst composition comprising a Group VIII metal having an atomic number greater than 26 supported on a crystalline zeolitic molecular sieve having a $SiO_2/Al_2O_3$ molar ratio of from about 4.5 to about 35, the essential X-ray powder diffraction pattern of Zeolite Y, an ion exchange capacity of not greater than 0.15, a unit cell dimension, $a_o$, of less than 24.45 Angstroms, a surface area of at least 350 $m^2/g$., a sorptive capacity for water at 25°C. and a $p/p_o$ value of 0.19 of not greater than 12 weight percent and a Residual Butanol Test value of not more than 0.6 weight percent, at least a portion of said Group VIII metal being deposited in the internal cavities of said molecular sieve, whereby at least a portion of said carbon-containing compound is converted to carbon dioxide.

2. Process according to claim 1 wherein the crystalline zeolitic molecular sieve has an ion exchange capacity of not greater than 0.070, a unit cell dimension of from 24.20 to 24.45 Angstroms, a sorptive capacity for water at 25°C. and a $p/p_o$ value of 0.19 of not greater than 5.00 weight percent, and a Residual Butanol Test value of not more than 0.40 weight percent.

3. Process according to claim 2 wherein the mixture of oxygen and carbon-containing compound is the water vapor-containing exhaust gas stream from an internal combustion engine and the temperature of contact with said molecular sieve is at least 400°F. up to the crystal destruction temperature of said molecular sieve.

4. Process according to claim 1 wherein the carbon-containing compound is carbon monoxide.

5. Process according to claim 1 wherein the carbon-containing compound is a hydrocarbon.

6. Process according to claim 5 wherein the hydrocarbon is a paraffin.

7. Process according to claim 1 wherein a major proportion of the Group VIII metal is deposited in the pores of the crystalline zeolitic molecular sieve.

8. Process according to claim 1 wherein the Group VIII noble metal.

9. Process according to claim 8 wherein the noble metal is platinum, palladium or a mixture thereof, said noble metal being present in an amount of from 0.1 to 1.6 weight percent based on the anhydrous weight of the zeolitic molecular sieve.

10. Process for converting $NO_x$ to nitrogen which comprises contacting said $NO_x$ under essentially neutral redox conditions and at elevated temperature with a catalyst composition comprising a Group VIII metal selected from the group consisting of rhodium, ruthenium, nickel and cobalt supported on a crystalline zeolitic molecular sieve having a $SiO_2/Al_2O_3$ molar ratio of from 4.5 to about 35, the essential X-ray powder diffraction pattern of Zeolite Y, an ion exchange capacity of not greater than 0.15, a unit cell dimension, $a_o$, of less than 24.45 Angstroms, a surface area of at least 350 $m^2/g.$, a sorptive capacity for water at 25°C. and a $p/p_o$ value of 0.19 of not greater than 12 weight percent and a Residual Butanol Test value of not more than 0.6 weight percent, at least a portion of said Group VIII metal being deposited in the internal cavities of said molecular sieve, whereby at least a portion of said $NO_x$ is converted to nitrogen.

11. Process according to claim 10 wherein the Group VIII metal on the molecular sieve base is a combination of platinum and rhodium.

12. Process according to claim 10 wherein the crystalline zeolitic molecular sieve has an ion exchange capacity of not greater than 0.070, a unit cell dimension of from 24.20 to 24.45 Angstroms, a sorptive capacity for water at 25°C. and a $p/p_o$ value of 0.19 of not greater than 5.00 weight percent, and a Residual Butanol Test value of not more than 0.40 weight percent.

13. Process according to claim 10 $NO_x$ is present in a water vapor-containing exhaust gas stream from an internal combustion engine and the temperature of contact with said zeolitic molecular sieve is from about 250°C. to 800°C.

- 36 -

14.   Process according to claim 13 wherein the Group VIII metal is rhodium, said rhodium being present in an amount of from 0.001 to 2.0 weight percent based on the anhydrous weight of the zeolitic molecular sieve.

15.   Process according to claim 13 wherein the temperature is from 450°C. to 600°C.

$\frac{1}{1}$

0020799

European Patent Office

**EUROPEAN SEARCH REPORT**

Application number

EP 79 101 957.3

## DOCUMENTS CONSIDERED TO BE RELEVANT

| Category | Citation of document with indication, where appropriate, of relevant passages | Relevant to claim |
|---|---|---|
| X,E | EP - A1 - 0 003 818 (UNION CARBIDE CORP.)<br>* whole document *<br><br>--- | 1-15 |
| | US - A - 3 276 993 (L.J. REID JR.)<br>* column 2, line 19 to column 3, line 64 *<br><br>--- | 1,4,<br>5,8,<br>9 |
| | US - A - 3 346 328 (F.J. SERGEYS et al.)<br>* column 1, line 44 to column 2, line 35 *<br><br>--- | 1,4,<br>5,8,<br>9 |
| | FR - A - 2 150 110 (W.R. GRACE & CO.)<br>* page 10, lines 1 to 9 *<br><br>--- | 10,11<br>13 |
| A | US - A - 3 645 914 (E.J. ROSINKSI et al.)<br>* whole document *<br><br>---- | |

**CLASSIFICATION OF THE APPLICATION (Int. Cl.³)**

F 01 N    3/10
B 01 J   29/12
B 01 D   53/34

**TECHNICAL FIELDS SEARCHED (Int.Cl.³)**

B 01 D   53/00
B 01 J   29/00
C 10 G   25/00
F 01 N    3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 30-01-1980 | STÖCKLE |